# EUROPÄISCHE PATENTANMELDUNG

(11) **EP 4 803 922 A1**
(43) Veröffentlichungstag der Anmeldung: **09.09.2026**
(21) Anmeldenummer: 26158506.1
(22) Anmeldetag: 13.02.2026
(51) Int. Cl.: G01S 7/40, G01C 21/16, G01S 7/497, G01S 13/42, G01S 13/52, G01S 13/60, G01S 13/86, G01S 17/50, G01S 17/86, G01S 17/931, G01S 19/52

(54) **VERFAHREN ZUM BETREIBEN EINES OBJEKTERKENNENDEN SENSORS**

(30) Priorität: 04.03.2025 DE 102025108191
(71) Anmelder: Robert Bosch GmbH, 70442 Stuttgart (DE)
(72) Erfinder: Mayer, Florian, Yokohama, Kanagawa, 222-0037 (JP)

(57) **Zusammenfassung**

Die vorliegende Erfindung bezieht sich auf ein Verfahren zum Betreiben eines objekterkennenden Sensors (102) eines Fahrzeugs (100), wobei eine von einem Satellitennavigationssystem (116) des Fahrzeugs (100) bereitgestellte Geschwindigkeitsinformation (114) als Referenzgeschwindigkeit (112) für eine Objekterkennung (108) des Sensors (102) verwendet wird.

## Beschreibung

### Gebiet der Erfindung

Die Erfindung betrifft ein Verfahren zum Betreiben eines objekterkennenden Sensors eines Fahrzeugs, einen entsprechenden objekterkennenden Sensor, sowie ein entsprechendes Computerprogrammprodukt.

### Stand der Technik

Ein objekterkennender Sensor kann beispielsweise ein Radar, ein Lidar oder eine Kamera sein. Um Objekte in einem Datenstrom des Sensors zu erkennen, kann eine Geschwindigkeitsinformation über eine Bewegungsgeschwindigkeit des Sensors erforderlich sein. Statische Objekte bewegen sich in einem Erfassungsbereich des Sensors relativ zum Sensor mit dieser Bewegungsgeschwindigkeit. Bewegte Objekte weisen eine andere Relativgeschwindigkeit zum Sensor auf.

Insbesondere in einer merkmalsarmen Umgebung, wie auf Sand, Schnee oder Wasser kann die Objekterkennung ohne die Geschwindigkeitsinformation zu falsch-positiv und/oder falsch-negativ erkannten Objekten führen.

Bei Straßenfahrzeugen kann die Geschwindigkeitsinformation meist über eine Raddrehzahl mit ausreichender Genauigkeit bereitgestellt werden.

### Offenbarung der Erfindung

Vor diesem Hintergrund werden mit dem hier vorgestellten Ansatz ein Verfahren zum Betreiben eines objekterkennenden Sensors eines Fahrzeugs, ein entsprechender objekterkennender Sensor, sowie ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Bei dem hier vorgestellten Ansatz wird anstelle (oder ergänzend zu) einer beispielsweise aus einer Drehzahlinformation abgeleiteten Geschwindigkeitsinformation eine von einem Satellitennavigationssystem bereitgestellte, d.h. von diesem ausgegebene bzw. von ausgegeben Daten desselben abgeleitete Geschwindigkeitsinformation als Referenzgeschwindigkeit bei der Objekterkennung verwendet.

Durch den hier vorgestellten Ansatz können die Objekterkennung und darauf basierende Sicherheitsfunktionen beispielsweise auch in Fahrzeugen ohne definierten Kontakt zum Untergrund verwendet werden.

Es wird ein Verfahren zum Betreiben eines objekterkennenden Sensors eines Off-Road Fahrzeugs vorgeschlagen, wobei eine von einem Satellitennavigationssystem des Fahrzeugs bereitgestellte Geschwindigkeitsinformation als Referenzgeschwindigkeit für eine Objekterkennung des Sensors verwendet wird.

Ideen zu Ausführungsformen der vorliegenden Erfindung können unter anderem als auf den nachfolgend beschriebenen Gedanken und Erkenntnissen beruhend angesehen werden.

Ein objekterkennender Sensor kann ein Radarsensor, ein Lidarsensor oder ein Kamerasensor sein. Der objekterkennende Sensor kann also aktiv oder passiv sein. Der Sensor kann eine Messeinrichtung zum Messen bzw. Erfassen einer physikalischen Größe umfassen. Ferner kann der Sensor eine Signalverarbeitungseinrichtung zum Verarbeiten von Signalen der Messeinrichtung umfassen. Der objekterkennende Sensor kann eine zumindest zweidimensionale Repräsentation eines Erfassungsbereichs erzeugen. In der Repräsentation können Objekte im Erfassungsbereich abgebildet sein. Ein auf dem objekterkennenden Sensor ausgeführter Algorithmus zur Objekterkennung kann die abgebildeten Objekte in der Repräsentation suchen und erkennen.

Wenn sich der Sensor relativ zu stillstehenden Objekten bewegt, bewegen sich die Objekte in der Repräsentation scheinbar mit der gleichen Geschwindigkeit wie der Sensor, jedoch in umgekehrter Richtung.

Unter Verwendung einer Referenzgeschwindigkeit kann der Algorithmus die scheinbare Bewegung der abgebildeten Objekte prädizieren und bewegte Objekte von den stillstehenden Objekten verbessert unterscheiden.

Das Fahrzeug kann insbesondere ein Off-Road Fahrzeug, wie beispielsweise ein Schneemobil, Luftkissenfahrzeug, ein Boot oder ein Jetski sein. Das Fahrzeug kann somit im Gegensatz zu einem Straßenfahrzeug keinen definierten Kontakt zum Untergrund aufweisen. Aufgrund des fehlenden definierten Kontakts kann eine Bewegungsgeschwindigkeit des Fahrzeugs über Grund nicht oder zumindest schwierig mit Fahrzeugsensoren gemessen und zuverlässig abgebildet werden. Eventuell vorhandene Drehzahlsensoren an einem Propeller oder einer Antriebskette können aufgrund eines unbekannten Schlupfs an Propeller oder Antriebskette meist keine verlässliche Geschwindigkeitsinformation bereitstellen.

Bei dem hier vorgestellten Ansatz wird eine unter Verwendung von Satellitensignalen berechnete Geschwindigkeitsinformation als die Referenzgeschwindigkeit für die Objekterkennung verwendet. Die Satellitensignale können von einem oder vorzugsweise mehreren Satelliten erzeugt bzw. emittiert werden. Sie können in einer konkreten Ausgestaltung auch als GPS-Signale bezeichnet werden.

Die Referenzgeschwindigkeit kann unter Verwendung einer von einem Inertialsensorsystem des Fahrzeugs bereitgestellten, zumindest einachsigen Beschleunigungsinformation gestützt werden. Insbesondere kann die Referenzgeschwindigkeit unter Verwendung einer räumlichen Beschleunigungsinformation gestützt werden. Eine Erfassungsrichtung der einachsigen Beschleunigungsinformation kann besonders vorteilhaft einer Hauptbewegungsrichtung des Fahrzeugs entsprechen. Durch die Beschleunigungsinformation kann ein Verlauf der Geschwindigkeit erfasst werden. Die Referenzgeschwindigkeit kann so auch zwischen Erfassungszeitpunkten der satellitengestützten Geschwindigkeitsinformation mitgekoppelt werden. Insbesondere, wenn sich die Geschwindigkeit des Fahrzeugs zwischen den Erfassungszeitpunkten ändert, kann die Referenzgeschwindigkeit mit einer hohen Genauigkeit bestimmt werden. Wenn die Beschleunigungsinformation räumlich erfasst wird, können auch Bewegungen des Fahrzeugs quer zur Hauptbewegungsrichtung erfasst werden. Dadurch können beispielsweise Drifts oder Sprünge mitgekoppelt werden.

Die Referenzgeschwindigkeit kann unter Verwendung einer von einem Inertialsensorsystem des Fahrzeugs bereitgestellten, zumindest einachsigen Drehrateninformation gestützt werden. Insbesondere kann die Referenzgeschwindigkeit unter Verwendung einer räumlichen Drehrateninformation gestützt werden.

Die einachsige Drehrateninformation kann besonders vorteilhaft um eine Hochachse des Fahrzeugs erfasst werden. Die Drehrateninformation kann also insbesondere eine Gierrate des Fahrzeugs abbilden. Durch die Drehrateninformation können Richtungsänderungen des Fahrzeugs erfasst werden. Die Referenzgeschwindigkeit kann so auch bereitgestellt werden, wenn das Fahrzeug zwischen Erfassungszeitpunkten der sattelitengestützten Geschwindigkeitsinformation seine Bewegungsrichtung ändert. Wenn die Drehrateninformation räumlich verwendet werden kann, können auch Richtungsänderungen um die Längsachse und/oder Querachse, also Rollbewegungen und/oder Nickbewegungen erfasst werden. Dadurch können beispielsweise Auf- und Ab Bewegungen, wie Drifts oder Sprünge mitgekoppelt werden.

Die Geschwindigkeitsinformation kann mit der Beschleunigungsinformation und/oder der Drehrateninformation zu der Referenzgeschwindigkeit fusioniert werden. Die Geschwindigkeitsinformation, Beschleunigungsinformation und Drehrateninformation können gleichwertig behandelt werden. Aus jeder dieser Informationen kann die Bewegung des Fahrzeugs mit einer hohen Qualität beziehungsweise Güte abgeleitet werden. Wenn eine der Informationen wenig aussagekräftig oder gestört ist, können die anderen Informationen verwendet werden. Beispielsweise kann die satellitengestützte Geschwindigkeitsinformation im Wald oder in einem Tal eingeschränkt zur Verfügung stehen. Dann kann unter Verwendung der Beschleunigung und/oder Drehrate mitgekoppelt werden, bis die satellitengestützte Geschwindigkeitsinformation als Stützstelle empfangen werden kann. Durch gleichzeitige Verwendung der Informationen können auch falsche Informationen erkannt werden, beispielsweise können Ausreißer leicht erkannt werden, da die Ausreißer statistisch verteilt auftreten und die Wahrscheinlichkeit von gleichzeitigen Ausreißern in mehreren Informationen gering ist.

Die Referenzgeschwindigkeit kann bei der Fusionierung unter Verwendung eines vom Satellitennavigationssystem bereitgestellten Konfidenzwerts für die Geschwindigkeitsinformation gewichtet werden. Das Satellitennavigationssystem kann eine Erkennungsgenauigkeit der Geschwindigkeit berechnen und im Konfidenzwert abbilden. Wenn der Konfidenzwert gut ist, kann die sattelitengestützte Geschwindigkeitsinformation bevorzugt verwendet werden. Wenn der Konfidenzwert schlecht ist, kann vorrangig die Beschleunigungsinformation und/oder die Drehrateninformation verwendet werden.

Bei der Objekterkennung kann die Geschwindigkeit des Fahrzeugs aus der Relativbewegung der Objekte abgeleitet werden. Insbesondere bei vielen erfassbaren beziehungsweise sichtbaren Objekten kann die Geschwindigkeit mit hoher Genauigkeit erkannt werden. Diese Geschwindigkeit kann mit der Geschwindigkeitsinformation des Satellitennavigationssystems verglichen werden. Wenn die Geschwindigkeit von der Objekterkennung mit einer hohen Konfidenz erkannt wird, können Fehler beim Sattelitenempfang erkannt werden. Insbesondere ist die optische Geschwindigkeitserkennung dort besonders gut, wo das Sattelitennavigationssystem die größten Probleme bei der Positionsbestimmung und folglich auch bei der Geschwindigkeitsbestimmung hat.

Das Verfahren ist vorzugsweise computerimplementiert und kann beispielsweise in Software oder Hardware oder in einer Mischform aus Software und Hardware beispielsweise in einem objekterkennenden Sensor implementiert sein.

Der hier vorgestellte Ansatz schafft ferner einen objekterkennenden Sensor, wobei der objekterkennende Sensor dazu ausgebildet ist, um die Schritte einer Variante des hier vorgestellten Verfahrens durchzuführen, anzusteuern bzw. umzusetzen.

Der objekterkennende Sensor kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des objekterkennenden Sensors und des Verfahrens in geeigneter Weise kombiniert, angepasst oder ausgetauscht werden können, um zu weiteren Ausführungsformen der Erfindung zu gelangen.

### Kurze Beschreibung der Zeichnung

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

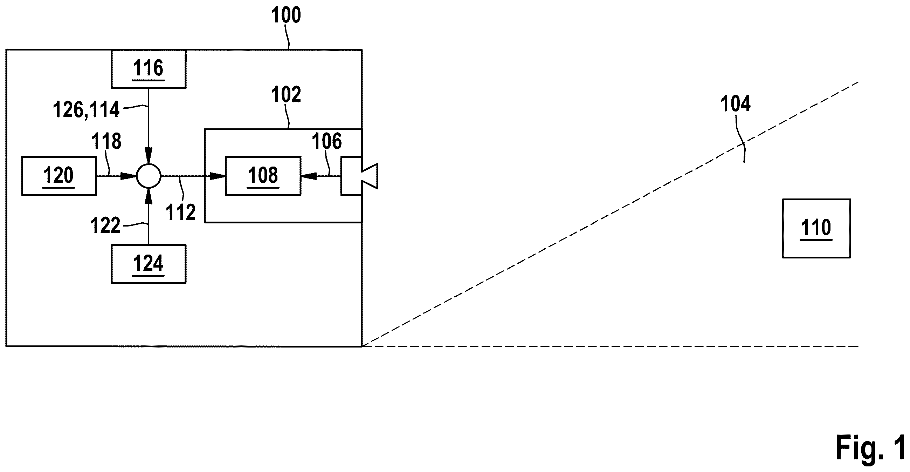

Fig. 1 zeigt eine Darstellung eines Fahrzeugs mit einem objekterkennenden Sensor gemäß einem Ausführungsbeispiel.

Die Figur ist lediglich schematisch und nicht maßstabsgetreu. Gleiche Bezugszeichen bezeichnen gleiche oder gleichwirkende Merkmale.

### Ausführungsformen der Erfindung

Fig. 1 zeigt eine Darstellung eines Fahrzeugs 100 mit einem objekterkennenden Sensor 102 gemäß einem Ausführungsbeispiel. Das Fahrzeug 100 ist hier ein Nicht-Straßenfahrzeug, wie beispielsweise ein Schneemobil, ein Buggy, ein Jetski oder ein Boot. Der Sensor 102 erfasst einen Erfassungsbereich 104 insbesondere vor dem Fahrzeug 100. Der Sensor 102 kann beispielsweise ein Radarsensor, ein Lidarsensor oder eine Kamera sein. Ein Radarsensor bzw. Lidarsensor beleuchtet den Erfassungsbereich 104 mit Radarwellen oder Laserstrahlen und empfängt Echos bzw. Reflexionen aus dem Erfassungsbereich 104. Die Kamera erfasst Licht aus dem Erfassungsbereich 104. Alle Arten von Sensoren bilden das Licht beziehungsweise die Echos in einer Bildinformation 106 aus Bildpunkten ab. Bei der Kamera ist die Bildinformation 106 zweidimensional. Bei Radar und Lidar weisen die Bildpunkte zusätzlich eine Entfernungsinformation auf und die Bildinformation 106 ist dreidimensional.

Die Bildinformation 106 wird in einer Objekterkennung 108 des Sensors 102 ausgewertet, um Objekte 110 im Erfassungsbereich 104 zu erkennen.

Wenn sich das Fahrzeug 100 bewegt, verändert sich die Bildinformation 106 mit einer Geschwindigkeit des Fahrzeugs, da sich zumindest die statischen Objekte 110 mit der Geschwindigkeit relativ zum Fahrzeug 100 bewegen. Die Objekterkennung 108 verfolgt die Objekte 110 in der Bildinformation 106. Diese Verfolgung wird verbessert, wenn eine Referenzgeschwindigkeit 112 des Fahrzeugs 100 bereitgestellt wird.

Da das Nicht-Straßenfahrzeug keinen zuverlässigen beziehungsweise genauen Geschwindigkeitssensor zum Erfassen der Geschwindigkeit hat, wird bei dem hier vorgestellten Ansatz eine satellitengestützte Geschwindigkeitsinformation 114 von einem Satellitennavigationssystem 116 des Fahrzeugs 100 eingelesen und als die Referenzgeschwindigkeit 112 verwendet.

In einem Ausführungsbeispiel wird die Referenzgeschwindigkeit 112 unter Verwendung einer Beschleunigungsinformation 118 von einem Beschleunigungssensor 120 des Fahrzeugs 100 gestützt.

In einem Ausführungsbeispiel wird die Referenzgeschwindigkeit 112 unter Verwendung einer Drehrateninformation 122 von einem Drehratensensor 124 des Fahrzeugs 100 gestützt.

Dabei sind die Beschleunigungsinformation 118 und/oder die Drehrateninformation 122 zumindest einachsig. Die Bewegung des Fahrzeugs 100 kann unter Verwendung der Beschleunigungsinformation 118 und/oder der Drehrateninformation 122 mitgekoppelt werden.

In einem Ausführungsbeispiel stellt das Sattelitennavigationssystem 116 einen Konfidenzwert 126 bereit, der eine Genauigkeit der Geschwindigkeitsinformation 114 abbildet. Die Genauigkeit nimmt beispielsweise ab, wenn das Satellitennavigationssystem 116 einen reduzierten Satellitenempfang hat. Beispielsweise kann die Genauigkeit im Wald oder in einer Schlucht nachlassen. Der Konfidenzwert 126 wird eingelesen und die Referenzgeschwindigkeit 112 stärker auf die Beschleunigungsinformation 118 und/oder die Drehrateninformation 122 gestützt, wenn die Genauigkeit der Geschwindigkeitsinformation 114 nachlässt.

Nachfolgend werden mögliche Ausgestaltungen der Erfindung nochmals zusammengefasst bzw. mit einer geringfügig anderen Wortwahl dargestellt.

Es wird ein Verfahren zur Schätzung der Fahrzeuggeschwindigkeit auf der Grundlage von GPS, Beschleunigung und Drehrate von Fahrzeugen ohne Raddrehzahlsensoren, z. B. von Geländefahrzeugen mit Fahrerassistenzsystemen, vorgestellt.

Die US 20160238714 beschreibt ein GPS-System mit Koppelnavigation für Raupenfahrzeuge. Das System verwendet Radsensoren und ein Gyroskop, um die Bewegung des Fahrzeugs zu messen und seine Position zu berechnen, wenn keine GPS-Signale verfügbar sind. Es integriert diese Messungen mit einem unscented Kalman-Filter, um eine genaue Positionierung zu gewährleisten.

Die US 20100076681 befasst sich mit einem Koppelnavigationssystem, das Beschleunigungsmesser zur Messung der Längs-, Quer- und Vertikalbeschleunigungen eines Fahrzeugs verwendet. Diese Messungen werden verwendet, um die Position des Fahrzeugs zu berechnen, indem die Beschleunigungen integriert und um Verzerrungen und Skalierungsfaktoren korrigiert werden.

Bei diesen Verfahren handelt es sich im Wesentlichen um eine technische Umsetzung mit Signalwerten der Winkelgeschwindigkeit. Darüber hinaus werden Methoden beschrieben, bei denen der Einsatz von Beschleunigungssensoren diskutiert wird, die zur Berechnung spezifischer Referenzen zur Validierung von GPS-Positionen und Geschwindigkeiten verwendet werden.

Fahrerassistenzsysteme, z.B. auf Radarbasis, benötigen für Auslösestrategien und Objekterkennungen eine Fahrzeuggeschwindigkeitsinformation. Bei Geländefahrzeugen, wie PWC (personal watercraft) oder Schneemobilen, stehen meist keine klassischen Geschwindigkeitsinformationen auf Basis von Raddrehzahlsensoren zur Verfügung.

Der Kern der hier beschriebenen Funktionen ist eine Kombination aus GPS-Signalen, Beschleunigung und winkelratenbasierter Verbesserung zur Schätzung der Fahrzeuggeschwindigkeit für Fahrerassistenzsysteme, die die Fahrzeuggeschwindigkeit als Input benötigen. Diese Funktion ist insbesondere für Fahrzeuge im Off-Highway-Einsatz ohne Raddrehzahlsensoren oder Ähnliches gedacht.

Die hier beschriebene Funktion ist in der Lage, verschiedene Fahrsituationen eines Fahrzeugs abzuschätzen und zu bewerten. Der Schwerpunkt liegt dabei auf der Unterscheidung zwischen Situationen, die sich auf die Fahrgeschwindigkeit des Fahrzeugs beziehen, und optional einer weiteren Situation, die eine Beschleunigung für verschiedene Auslösestrategien, wie z.B. radarbasierte Funktionen, beinhaltet. Als Variante wird im Folgenden die GPS-Geschwindigkeit als Grundlage verwendet, um die Kombination von GPS-Geschwindigkeit und Geschwindigkeitssignalverbesserungen durch die Verwendung zusätzlicher Sensorsignale zu erklären.

Bei der GPS Fahrzeuggeschwindigkeitsverbesserung wird als Eingangssignal eine GPS-Geschwindigkeit als Grundlage für die Bereitstellung der Fahrzeuggeschwindigkeit verwendet. Die Genauigkeit hängt von der Rate (z. B. ein Signal pro Sekunde) und der Verfügbarkeit der Satelliten ab. Als weiteres Eingangssignal wird ein Beschleunigungssensorsignal in mindestens eine Achse verwendet. Zusätzlich kann das Beschleunigungssensorsignal in mehreren Achsen des Fahrzeugkoordinatensystems verwendet werden. Als weiteres Eingangssignal wird ein Drehratensensorsignal in mindestens eine Achse verwendet. Zusätzlich kann das Drehratensensorsignal in mehreren Achsen des Fahrzeugkoordinatensystems verwendet werden.

Das GPS-basierte Geschwindigkeitssignal ist die Grundlage für eine Fahrzeuggeschwindigkeitsschätzung, die je nach Sensorleistung in ihrer Genauigkeit variiert. Dieses Geschwindigkeitssignal kann durch so genannte Koppelnavigation verbessert werden, indem Beschleunigungssignale hinzugefügt werden, um Änderungen der GPS-Geschwindigkeit mit der Fahrzeugbeschleunigung zu korrelieren und so die Genauigkeit und Robustheit des Fahrzeuggeschwindigkeitssignals zu verbessern. Um das Geschwindigkeitssignal weiter zu verbessern, können zusätzlich Drehratensignale zu diesem Prozess hinzugefügt werden. Die Signale können gefiltert werden, z. B. mit einem Tiefpassfilter, um die Signalstabilität zu verbessern.

Durch die Verwendung der Beschleunigungssensorsignale in einem definierten Koordinatensystem kann die Fahrzeuggeschwindigkeit nicht nur in Fahrtrichtung bestimmt werden, sondern auch in Quer- und Längsrichtung aufgeteilt werden, was zusätzliche Informationen für radargestützte Systeme liefern kann. Dies kann die Auslösestrategien für Fahrzeuge in Drifts verbessern, z.B. für Geländesportfahrzeuge, Wasserfahrzeuge oder Schneefahrzeuge.

Off-Road Fahrzeuge werden häufig in Waldgebieten und Tälern eingesetzt, in denen die Abdeckung mit GPS-Ortungs- und Geschwindigkeitsinformationen gering ist. Die hier vorgestellte Technologie kann die Funktionsfähigkeit des geschwindigkeitsabhängigen radargestützten Systems in diesen Gebieten verbessern.

Diese verbesserte Fahrzeuggeschwindigkeit wird insbesondere als Eingangssignal für Fahrerassistenzsysteme für Fahrzeuge ohne Radgeschwindigkeitsinformationen verwendet. Die Geschwindigkeit ist wichtig für die Objekterkennung, unabhängig davon, ob das Assistenzsystem radar- oder kamerabasiert ist.

Das System kann aus einer Steuereinheit, Sensoren (GPS-Modul, Beschleunigungssensor und/oder Drehratensensor), einer Mensch-Maschine-Schnittstelle und/oder einer Steuereinheit für aktive Systeme wie Änderungen des Motordrehmoments bestehen.

Ein weiterer Vorteil dieses Mehrquellenkonzepts für die Fahrzeuggeschwindigkeit, das für Fahrerassistenzsysteme verwendet wird, ist ein Backup für die Schätzung der Fahrzeuggeschwindigkeit, sobald eine Quelle vorübergehend nicht verfügbar ist. Zum Beispiel, wenn die GPS-Geschwindigkeit vorübergehend nicht verfügbar ist.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines objekterkennenden Sensors (102) eines Fahrzeugs (100), wobei eine von einem Satellitennavigationssystem (116) des Fahrzeugs (100) bereitgestellte Geschwindigkeitsinformation (114) als Referenzgeschwindigkeit (112) für eine Objekterkennung (108) des Sensors (102) verwendet wird.

2. Verfahren gemäß Anspruch 1, bei dem die Referenzgeschwindigkeit (112) unter Verwendung einer von einem Inertialsensorsystem des Fahrzeugs (100) bereitgestellten, zumindest einachsigen Beschleunigungsinformation (118) gestützt wird.

3. Verfahren gemäß Anspruch 2, bei dem die Referenzgeschwindigkeit (112) unter Verwendung einer räumlichen Beschleunigungsinformation (118) gestützt wird.

4. Verfahren gemäß einem der vorhergehenden Ansprüche, bei dem die Referenzgeschwindigkeit (112) unter Verwendung einer von einem Inertialsensorsystem des Fahrzeugs (100) bereitgestellten, zumindest einachsigen Drehrateninformation (122) gestützt wird.

5. Verfahren gemäß Anspruch 4, bei dem die Referenzgeschwindigkeit (112) unter Verwendung einer räumlichen Drehrateninformation (122) gestützt wird.

6. Verfahren gemäß einem der Ansprüche 2 bis 4, bei dem die Geschwindigkeitsinformation (114) mit der Beschleunigungsinformation (118) und/oder der Drehrateninformation (122) zu der Referenzgeschwindigkeit (112) fusioniert wird.

7. Verfahren gemäß Anspruch 6, bei dem die Referenzgeschwindigkeit (112) bei der Fusionierung unter Verwendung eines vom Satellitennavigationssystem (116) bereitgestellten Konfidenzwerts (126) für die Geschwindigkeitsinformation (114) gewichtet wird.

8. Objekterkennender Sensor (102), wobei der objekterkennende Sensor (102) dazu konfiguriert ist, das Verfahren gemäß einem der vorhergehenden Ansprüche in entsprechenden Einrichtungen auszuführen, umzusetzen und/oder anzusteuern.

9. Computerprogrammprodukt, das dazu eingerichtet ist, einen Prozessor bei Ausführung des Computerprogrammprodukts dazu anzuleiten, das Verfahren gemäß einem der Ansprüche 1 bis 7 auszuführen, umzusetzen und/oder anzusteuern.

10. Maschinenlesbares Speichermedium, auf dem das Computerprogrammprodukt gemäß Anspruch 9 gespeichert ist.
